# EUROPÄISCHE PATENTSCHRIFT

(11) **EP 1 072 635 B1**
(45) Veröffentlichungstag und Bekanntmachung des Hinweises auf die Patenterteilung: **28.09.2005**
(21) Anmeldenummer: 00890227.2
(22) Anmeldetag: 21.07.2000
(51) Int. Cl.: C08J 7/14

(54) **Verfahren zur Modifizierung von Polymeroberflächen**
Process for modifying polymeric surfaces
Procédé pour modifier des surfaces polymères

(30) Priorität: 22.07.1999 AT 127399
(43) Veröffentlichungstag der Anmeldung: 31.01.2001
(73) Patentinhaber: Kern, Wolfgang Dr., 8055 Neuseiersberg (AT)
(72) Erfinder: Kern, Worfgang, 8055 Neuseiersberg (AT); Kave, Thomas Dipl.Ing., 8664 Veitsch (AT)
(74) Vertreter: Schwarz, Albin

(56) Entgegenhaltungen:
- WO-A-97/11989
- DE-A- 2 301 073
- US-A- 3 911 184

## Beschreibung

Die Erfindung betrifft ein Verfahren zur Modifizierung oberflächennaher Bereiche von Polymeren im festen Zustand.

Die Oberflächeneigenschaften von Kunststoffen, d.h. Materialien, die aus hochmolekularen Verbindungen hergestellt wurden, sind für eine Vielzahl von Anwendungen von großer Bedeutung. So werden beispielsweise im Bereich der Medizintechnik und der Biochemie aus Gründen der Verträglichkeit der Kunststoffe mit Blut und Gewebematerial spezielle Oberflächeneigenschaften benötigt (Plastverarbeiter 38/4, S. 54 ff. (1987); 38/5, S. 76 ff. (1987); 38/6, S. 52 ff. (1987)). Auch zum Zweck der Benetzung, Beschichtung, Lackierung und Verklebung werden besondere Anforderungen an die Oberflächen von Kunststoffen gestellt.

Weitere Anwendungen betreffen Kunststoffe, die in den oberflächennahen Bereichen eine bestimmte elektrische Leitfähigkeit, einen bestimmten Vernetzungsgrad, eine bestimmte Hydrophilie bzw. Hydrophobie sowie eine bestimmte Permeabilität gegenüber Gasen, Dämpfen oder flüssigen Verbindungen aufzuweisen haben. Eine Übersicht über solche Erfordernisse ist beispielsweise in der Monographie von C.M. Chan, Polymer Surface Modification and Characterization, Hanser Publishers, München 1994, zu finden.

Zahlreiche technisch verwendete Kunststoffe besitzen zwar die für den jeweiligen Einsatzzweck geeigneten Masseeigenschaften ("bulk properties"), ihre Oberflächen weisen jedoch nur selten zufriedenstellende Eigenschaften auf. Im folgenden bezieht sich der Begriff "Oberfläche" auf die oberflächennahen Bereiche eines Körpers, wobei die Schichtdicke dieser oberflächennahen Bereiche zwischen einigen Nanometern und mehreren Mikrometern liegen kann.

In der Literatur wurden mehrere technische Verfahren vorgestellt, die darauf abzielen, die Oberflächeneigenschaften von Formteilen aus Polymeren zu verändern. Die Besonderheit dieser technischen Verfahren liegt darin, daß die Masseeigenschaften der behandelten Formteile im wesentlichen unverändert bleiben.

Es sind Verfahren bekannt, bei denen die Oberfläche von Polymeren mittels ätzender oder oxidierender Medien, z.B. Lösungen von Chromsäure, behandelt wird. Weiters sind Prozesse bekannt, bei denen eine Behandlung der Kunststoffoberfläche durch Beflammung erfolgt. In ähnlicher Weise kann in kontinuierlicher Prozeßführung die Oberfläche von Kunststoff-Folien mittels Corona-Entladungen verändert werden. Verfahren mit Beflammung und CoronaEntladung werden bevorzugt für Polyolefine angewendet, wobei stets eine partielle Oxidation erfolgt, die eine erhöhte Polarität der Oberfläche zur Folge hat. Derartige Techniken sind beispielsweise in der Monographie von C.M. Chan, Polymer Surface Modification and Characterization, Hanser Publishers, München 1994, beschrieben. Eine partielle Oxidation wird auch mittels eines Sauerstoff-Plasmas erzielt oder durch eine Bestrahlung der Oberfläche mit kurzwelligem UV-Licht in Gegenwart von Sauerstoff ermöglicht (H. Bader et al., Kunststoffe 87, S. 636 ff. (1997)).

Die genannten Verfahren besitzen jedoch den Nachteil, daß sie hinsichtlich der an der Kunststoffoberfläche ablaufenden chemischen Reaktionen wenig spezifisch sind, d.h. keine einheitliche, vorherbestimmbare Modifizierung bewirken.

Ein technisches Verfahren, das diesen Nachteil nicht aufweist und die Kunststoffoberfläche mit spezifischen funktionellen Gruppen modifizieren kann, ist die Pfropf-Copolymerisation ("grafting"). Dabei werden Monomere, z.B. Acrylatmonomere, an die Kunststoffoberfläche gebunden. Die Initiierung der Reaktion erfolgt durch UV-Licht oder ionisierende Strahlung. Ein derartiges Verfahren ist in B. Ranby, Die Makromolekulare Chemie, Macromolecular Symposia 63, S. 55 ff. (1992) beschrieben.

Weiters sind spezielle Plasmatechniken bekannt, die eine Ausrüstung von Kunststoffoberflächen mit Nitrilgruppen, Aminogruppen und anderen funktionellen Gruppen ermöglichen (C.M. Chan et al., Surface Science Reports 24, S. 1 ff. (1996)).

Bei einem Verfahren gemäß der eingangs beschriebenen Art, bekannt aus H. Niino, A. Yabe, Applied Physics Letters 63, S. 3527 ff. (1993), erfolgt die Bestrahlung von Kunststoffoberflächen mit ultraviolettem Licht in Gegenwart von Hydrazin, wodurch Aminogruppen an der Kunststoffoberfläche eingeführt werden. Aus U. Meyer et al., Macromolecular Rapid Communications 20 (1999) ist der Einsatz von Bromcyan zur Einführung von Nitrilgruppen an der Oberfläche bekannt. Die Einführung von borhaltigen Gruppen kann durch den Einsatz gasförmiger Borverbindungen erzielt werden (M. Okoshi et al., Journal of Material Research 7, S. 1912 ff. (1992)).

Von besonderer Bedeutung sind mit Sulfonsäuregruppen (-SO₃H) ausgerüstete Polymeroberflächen, da sich derartig ausgestattete Kunststoffe für Anwendungen im medizinischen Bereich als hervorragend geeignet erwiesen haben (D. Klee et al., Journal of Materials Science - Materials in Medicine 5, S. 592 ff. (1994)). Weiters werden Sulfonsäuregruppen enthaltende Polymere und Harze für chromatographische Trennverfahren, Ionenaustauschverfahren und Membranprozesse eingesetzt.

Aus T.A. Giroux, S.L. Cooper, Journal of Applied Polymer Science 43, S. 145 ff. (1991) und D. Klee et al., Journal of Materials Science - Materials in Medicine 5, S. 592 ff. (1994) sind Plasmaverfahren bekannt, bei denen dem Plasmagas Schwefeldioxid (SO₂) und Sauerstoff (02) beigemengt werden, so daß es während der Plasmareaktion zur Bindung von Sulfonsäuregruppen an die Kunststoffoberfläche kommt.

Nachteilig dabei ist jedoch, daß für die Durchführung dieser Verfahren, wie für alle anderen Plasmaverfahren auch, ein Hochvakuum, d.h. ein Vakuum im Bereich von einigen mbar, erforderlich ist. Diese Erfordernis führt sowohl zu erheblichen Problemen bei der Verfahrensführung als auch zu hohen Kosten, bedingt durch den Betrieb von evakuierbaren Apparaturen. Ferner sind bei diesen Verfahren kontinuierliche Prozesse nur unter großen Schwierigkeiten durchführbar. Ein weiterer Nachteil dieser Verfahren besteht darin, daß eine ortsaufgelöste Modifizierung der Kunststoffoberfläche nicht oder nur unter enormem technischem Aufwand möglich ist. Weiters ist der Ablauf von Plasmamodifizierungen sehr komplex, wodurch die Erzielung von Kunststoffoberflächen definierter Zusammensetzung erschwert wird.

In der DE-A - 2 301 073 ist ein Verfahren zur Verbesserung der Oberflächeneigenschaften eines Kunststoffgegenstandes durch Einführung hydrophiler Gruppen in die Oberflächenschichten beschrieben, bei dem der Gegenstand in einen Strom bestehend aus SO₂, O₂ und Wasserdampf eingeführt und mit UV-Licht bestrahlt wird, wodurch sich in der Oberflächenschicht Sulfonsäuregruppen bilden.

Aus der WO-A - 97/11989 ist es bekannt, Polymere zu sulfonieren, indem das Polymer unter geringem Druck mit SO₂ und Sauerstoff in Kontakt gebracht und einer freie Radikale erzeugenden Energiequelle ausgesetzt wird.

Gemäß US-A - 3,911,184 werden Plastikverpackungen durch Oberflächensulfonierung mittels SO₃ und anschließender Neutralisation der Sulfonsäuregruppen mit Metallsalzen oder Polyamiden in einer wässrigen Alkalimetalllauge für Sauerstoff undurchlässig gemacht.

Die vorliegende Erfindung bezweckt die Vermeidung der genannten Nachteile und Schwierigkeiten und stellt sich die Aufgabe, ein Verfahren bereitzustellen, das eine Modifizierung von Polymeroberflächen durch Einführung von Sulfonsäuregruppen an der Oberfläche ermöglicht und auch bei Atmosphärendruck durchgeführt werden kann. Ferner soll das Verfahren auch eine ortsaufgelöste Modifizierung ermöglichen und sowohl für eine diskontinuierliche als auch kontinuierliche Prozeßführung anwendbar sein.

Diese Aufgabe wird erfindungsgemäß dadurch gelöst, daß die oberflächennahen Bereiche des Polymers mit einer gasförmigen, sowohl Schwefeldioxid als auch Sauerstoff enthaltenden Atmosphäre in Kontakt gebracht und gleichzeitig und/oder anschließend einer energiereichen Strahlung ausgesetzt werden, wobei Sulfonsäuregruppen in den oberflächennahen Bereichen gebildet werden, und daß vor oder nach der Sulfonierung mittels Vernetzung eine Stabilisierung der oberflächennahen Bereiche oder des gesamten Polymers durchgeführt wird.

Durch die Einwirkung der energiereichen Strahlung in Gegenwart von gasförmigem Schwefeldioxid und Sauerstoff werden in den oberflächennahen Bereichen radikalische Reaktionen bewirkt, die zu einer kovalenten Bindung von Sulfonsäuregruppen führen. Es ergeben sich allgemeine Strukturen der Form R-(SO₂-OH)ₙ, wobei R für ein Makromolekül steht und n eine variable Zahl ist. Die Zahl der eingeführten Sulfonsäuregruppen (n) kann durch Veränderung der Reaktionsparameter variiert werden.

Strahlenchemische Verfahren, die sich zur Einführung von Sulfonsäuregruppen in niedermolekulare Verbindungen eignen, sind aus der Literatur unter den Begriffen "Photosulfonierung" und "Sulfoxidation" bekannt (z.B. A.M. Braun et al., Photochemical Technology, S. 354 ff., John Wiley & Sons, Chichester (1991)). Solche, auf der Anwendung von Schwefeldioxid und Sauerstoff als Reaktionspartner beruhende Verfahren werden bisher jedoch nur zur Sulfoxidation von niedermolekularen Verbindungen im Bereich C₆ bis C₂₄ in flüssiger Form eingesetzt, wobei die Durchführung der Reaktion nur bei unverzweigten Alkanen oder Alkylbenzolen mit zufriedenstellender Ausbeute gelingt. Beispiele solcher Verfahren sind beispielsweise in den Patentschriften DE 7355096, DE 1252666, F 1531897, F 1536649 und US 3,260,741 beschrieben.

Im Gegensatz dazu gelingt es mit dem erfindungsgemäßen Verfahren, durch eine mittels energiereicher Strahlung ausgelöste Sulfoxidation die oberflächennahen Bereiche eines in fester Form vorliegenden Polymers zu modifizieren. Überraschenderweise ist die Einführung von Sulfonsäuregruppen auch bei solchen Polymeren möglich, die andere Wiederholungseinheiten als -(CH₂-CH₂)- enthalten, was aufgrund der Erfahrungen mit den zuvor genannten strahlenchemischen Verfahren nicht zu erwarten war.

Vorteilhaft können für das erfindungsgemäße Verfahren natürliche, abgewandelte natürliche oder synthetische Polymere eingesetzt werden. Hierbei ist es unerheblich, ob das zu behandelnde Polymer als Thermoplast, als Elastomer oder als Duromer vorliegt. Das Verfahren ist auf Polymere verschiedenen Vernetzungsgrades und verschiedenen Molekulargewichts anwendbar, sofern es von seiner Struktur her einer radikalischen Sulfonierungsreaktion zugänglich ist.

Gemäß einer bevorzugten Ausführungsform werden beim erfindungsgemäßen Verfahren als zu modifizierende Polymere Polyolefine eingesetzt, davon besonders bevorzugt Polyethylen, Polystyrol und Polymethylmethacrylat. Weiters bevorzugt ist der Einsatz von Polyamiden.

Es sind auch andere auf Vinyl-Monomeren, wie Propylen, Butadien, Acrylsäureester, Methacrylsäureester, Acrylnitril etc., basierende Polymere einsetzbar. Für Polymere mit einem sehr hohen Gehalt an olefinischen Doppelbindungen wie Polyisopren ist das Verfahren jedoch nur beschränkt anwendbar. Weiters kann das Verfahren auf Polymere, die durch eine Polykondensation hergestellt wurden, z.B. Polyester, Polycarbonate, oder auf Polymere, die durch eine Polyaddition hergestellt wurden, beispielsweise Polyurethane, auf Polymere, die durch eine Olefin-Metathesereaktion hergestellt wurden, z.B. Polyoctenamer, sowie auf Mischungen davon angewendet werden. Ebenso können Kunstharze, die durch Kondensations-, Additionsreaktionen und andere Verfahren produziert wurden, unabhängig von ihrem Molekulargewicht und Vernetzungsgrad, eingesetzt werden. Eine weitere Anwendungsmöglichkeit ergibt sich bei Polymeren und Kunstharzen, die Füllstoffe, z.B. Kieselsäuren, Kreide, Silikate oder Ruß, Farbpigmente, z.B. Eisenoxide oder Titanoxid, Weichmacher, beispielsweise Phthalsäureester, Zitronensäureester oder höhere Kohlenwasserstoffe, sowie Additive verschiedenster Art, z.B. Stabilisatoren, Treibmittel oder Prozeßhilfsmittel, enthalten.

Die zu modifizierenden Polymere können in jeder nach der Herstellung vorliegenden Gestalt, vorzugsweise in Form von dünnen Filmen und Folien eingesetzt werden.

Als energiereiche elektromagnetische Strahlung ist vorteilhaft ultraviolette Strahlung, Röntgen-, Gamma- oder Elektronenstrahlung einsetzbar, vorzugsweise eine UV-Strahlung mit Wellenlängen von 190 bis 360 nm. Zur Erzeugung einer derartigen UV-Strahlung können zum Beispiel Quecksilberlampen, Xenon-Lampen, Excimer-Strahler oder Excimer-Laser verwendet werden.

Vorzugsweise liegt das Volumsverhältnis von Schwefeldioxid zu Sauerstoff in der gasförmigen Atmosphäre, in die das Polymer eingebracht oder mit der es bespült wird, im Bereich von 20:80 bis 97:3, besonders bevorzugt im Bereich von 60:40 bis 85:15.

Zwecks Verdünnung des Sulfoxidationsgases kann die Gasatmosphäre vorteilhaft inerte Komponenten enthalten, vorzugsweise Stickstoff oder Argon, die bevorzugt in einer Menge von 1 bis 99 Vol%, besonders bevorzugt aber in einer Menge von 20 bis 60 Vol% vorhanden sind.

Gemäß einer weiteren bevorzugten Ausführungsform der Erfindung enthält die Gasatmosphäre Komponenten, die einen beschleunigenden oder sensibilisierenden Einfluß auf die Sulfoxidationsreaktion ausüben. Zu diesen Verbindungen zählen Ozon, Schwefeltrioxid, Essigsäureanhydrid und halogenierte Verbindungen wie Chloroform und Dichlormethan (A.M. Braun et al., Photochemical Technology, S. 354 ff. (1991)).

Ebenso vorteilhaft enthält die gasförmige Atmosphäre Wasserdampf.

Das erfindungsgemäße Verfahren kann in einem Druckbereich von 0,1 bar bis 10 bar durchgeführt werden; ein Druck von ungefähr 1 bar ist jedoch bevorzugt, da hierbei keine Einrichtungen zur Erzeugung eines Vakuums oder eines Überdrucks notwendig sind.

Vorzugsweise wird das zu modifizierende Polymer vor der Bestrahlung 1 Sekunde bis 10 Stunden, bevorzugt 1 bis 60 Minuten, in der gasförmigen Atmosphäre belassen. In dieser Zeit wird ein Eindiffundieren der gasförmigen Komponenten in die oberflächennahen Bereiche des Polymers ermöglicht, wodurch die Bildung der Sulfonsäuregruppen bei Bestrahlung beschleunigt wird.

Die Bestrahlung des Polymers erfolgt zweckmäßig entweder flächig oder ortsaufgelöst. Für eine ortsaufgelöste Modifizierung der Polymeroberfläche werden optische Projektionssysteme eingesetzt, die eine Abbildung einer Maske auf die Oberfläche gewährleisten ("patterned illumination").

Üblicherweise wird die Bestrahlung der Polymeroberfläche von vorne, d.h. durch die Gasatmosphäre hindurch, ausgeführt. Im Fall von Polymeren, die in Form von Folien oder dünnen Platten vorliegen und für die Strahlung teilweise transparent sind, kann die Bestrahlung auch von hinten, d.h. durch das Polymer hindurch, erfolgen.

Die Temperatur des Polymers während der Bestrahlung liegt zwischen -50°C und +250°C, vorzugsweise zwischen +10°C und +70°C. Die Einstellung und Beibehaltung der gewünschten Temperatur wird zweckmäßigerweise mittels einer Thermostatisierung gewährleistet.

Vorzugsweise liegt die von der Strahlung zugeführte Energiedosis im Bereich von 1 mJ/cm² bis 200 J/cm². Bei Verwendung von polychromatischer UV-Strahlung hat sich z.B. eine Energiezufuhr zwischen 0,5 und 10 J/cm² als vorteilhaft erwiesen.

Gemäß einer bevorzugten Ausführungsform wird die Modifizierung kontinuierlich durchgeführt. Zu diesem Zweck werden die zu behandelnden Polymere während des Bestrahlungsprozesses durch einen mit der gewünschten Gasatmosphäre befüllten Reaktor hindurchbewegt.

Durch zweckmäßige Wahl der Reaktionsparameter kann die Eindringtiefe der Modifizierungsreaktion in das Polymer variiert werden. Die Eindringtiefe kann in einem Bereich zwischen einigen Nanometern und mehreren Mikrometern, insbesondere zwischen einem und zwanzig Mikrometern, liegen. Das eröffnet die Möglichkeit, sehr dünne Polymerschichten, z.B. Folien und Filme mit Schichtdicken zwischen 1 und 40 µm, über die ganze Schichtdicke mit Sulfonsäuregruppen auszurüsten, wobei die Bestrahlung erforderlichenfalls von beiden Seiten erfolgen kann.

Das Fortschreiten der Sulfoxidationsreaktion kann mit bekannten physikalischen Analyseverfahren, wie Infrarotspektroskopie, Röntgen-Photoelektronenspektroskopie, energie- oder wellenlängendispersiver Röntgenspektroskopie, verfolgt werden. Zur quantitativen Beurteilung der Sulfonsäuregruppenbildung ist auch die Messung des Kontaktwinkels einer die Polymeroberfläche benetzenden Kontaktflüssigkeit, z.B. Wasser, oder ein Färbeverfahren geeignet, das auf Sulfonsäuregruppen anspricht, beispielsweise unter Verwendung von Methylenblau. Der Nachweis von Sulfonsäuren durch gefärbte Komplexe, die durch Reaktion von organischen Sulfonsäuren und Methylenblau entstehen, ist zum Beispiel aus J. Longwell, W.D. Maniece, Analyst 80, S. 167 ff. (1955) bekannt.

Bekannt ist weiters (beispielsweise aus R.L. Clough, S.W. Shalaby, Radiation Effects on Polymers - ACS Symposium Series 475, American Chemical Society, Washington 1991), daß durch die Einwirkung energiereicher elektromagnetischer Strahlung andere Prozesse, wie Vernetzungs- oder Fragmentierungsreaktionen sowie Oxidationsprozesse, im Polymer ausgelöst werden. Solche Prozesse können zwar gleichzeitig mit der erfindungsgemäßen Einführung von Sulfonsäuregruppen in das Polymer auftreten, diese jedoch nicht wesentlich behindern oder beeinflussen.

Nach der strahlungschemischen Modifizierung wird das behandelte Polymer vorteilhaft einem Verfahren zur Entfernung unerwünschter Komponenten oder Reaktionsprodukte unterzogen. Beispielsweise kann das Polymer eine gewisse Zeit im Vakuum oder bei erhöhter Temperatur gelagert werden, oder aber mittels geeigneter Extraktionsmittel, wie Wasser oder Aceton, von unerwünschten löslichen Stoffen befreit werden.

Erfindungsgemäß wird vor oder nach der Modifizierung eine Stabilisierung der modifizierten Oberfläche oder des gesamten Polymers durch eine Vernetzungsreaktion durchgeführt. Beispielsweise kann vor der Oberflächenmodifizierung durch Vernetzung mittels β- oder γ-Strahlung oder durch Photovernetzung in Gegenwart eines Photoinitiators eine Stabilisierung vorgenommen werden, wodurch ein Herauslösen von Teilen der Oberfläche nach der Modifizierung verhindert wird. Auf dieselbe Weise kann die Stabilisierung nach der Modifizierung erfolgen. Es wird dadurch ein stabileres Polymer erhalten; gleichzeitig kann die Modifizierung zu einem höheren Grad durchgeführt werden.

Die in den oberflächennahen Bereichen gebildeten Sulfonsäuregruppen werden gemäß einer bevorzugten Ausgestaltung als katalytisch wirksame Gruppen für eine weitere chemische Reaktion oder als Initiatoren für eine Polymerisationsreaktion eingesetzt. So ist es beispielsweise möglich, eine Pfropf-Copolymerisation ("grafting reaction") nach der Modifizierung durchzuführen, da die an der Oberfläche vorhandenen sauren Gruppen eine kationische Polymerisation, z.B. von Epoxidgruppen oder Vinylether-Gruppen enthaltenden Monomeren, bewirken können. Weiters können die Sulfonsäuregruppen an der Oberfläche eine säureempfindliche Verbindung umwandeln, beispielsweise die Zersetzung von siliziumorganischen Verbindungen wie Tetraethyl-orthosilikat zu Kieselsäure bzw. quarzähnlichen Schichten bewirken, wodurch eine Schutzschicht auf den modifizierten oberflächennahen Bereichen des Basispolymers gebildet wird.

Gemäß einer weiteren bevorzugten Ausführungsform der Erfindung werden die in den oberflächennahen Bereichen gebildeten Sulfonsäuregruppen in einer nachfolgenden chemischen Reaktion zumindest teilweise in Sulfonsäurederivate umgewandelt. Zur Derivatisierung sind besonders Reaktionen geeignet, die eine Umwandlung in die folgenden bevorzugten Strukturen bewirken, wobei R verallgemeinernd für ein Makromolekül steht:
- Sulfonamide R-SO₂-NR₁R₂, wobei R₁ und R₂ H-Atome oder organische Substituenten sind.
- Sulfonsäureester R-SO₂-O-R₃, wobei R₃ ein organischer Substituent ist.
- Sulfonsäurehalogenide R-SO₂-X, wobei X Chlor, Brom oder Fluor ist.
- Salze der Sulfonsäure mit der Struktur R-[SO₂-O]⁻[K]⁺, wobei K ein einfach geladenes Kation darstellt.
- Salze der an das Polymer gebundenen Sulfonsäure mit mehrfach geladenen Kationen Kⁿ⁺ sowie Komplexe der an das Polymer gebundenen Sulfonsäure.

Vorteilhafterweise wird das in seinen oberflächennahen Bereichen modifizierte Polymer mit Formgebungsverfahren, wie Extrusion, Spritzguß, Tiefziehen und Kalandrieren, weiterverarbeitet. Hiermit kann beispielsweise erreicht werden, daß der geschaffene Formkörper, z.B. ein Spritzgußteil, ähnlich gute Oberflächeneigenschaften aufweist wie das zur Formgebung eingesetzte oberflächenmodifizierte Polymergranulat.

Anhand der im folgenden beschriebenen Beispiele wird das erfindungsgemäße Verfahren näher veranschaulicht.

### Beispiel 1

### Flächige Modifizierung der Oberfläche von Low-Density-Polyethylen

Eine Folie aus Low-Density-Polyethylen (Fläche 10 x 10 mm², Schichtdicke 20 µm) wurde 10 min unter Verwendung eines Ultraschallbades mit einem Gemisch, das 50 Volumsteile Aceton und 50 Volumsteile Wasser enthielt, bei einer Temperatur von 20°C gereinigt. Nach Trocknung im Vakuum (2 h bei 20 mbar und 40°C) wurde die Polyethylenfolie in einen Reaktor eingebracht, der eine Bespülung mit einem Gasgemisch und gleichzeitig eine UV-Bestrahlung der Folie durch ein Quarzfenster ermöglichte. Der Abstand der Folienoberfläche zur Innenseite des Quarzfensters wurde auf 2 mm eingestellt. Die Polyethylenfolie wurde im Reaktor mittels einer Thermostatisiervorrichtung auf eine Temperatur zwischen 50°C und 60°C gebracht.

Die Polyethylenfolie wurde dann im Reaktor für eine Zeitspanne von 2 min bei Normaldruck (1 bar) mit einem Gasgemisch bespült, das folgende Zusammensetzung aufwies: 33 Volumsteile Schwefeldioxid (SO₂), 14 Volumsteile Sauerstoff (O₂) und 53 Volumsteile Stickstoff (N₂).

Nach Ablauf der Zeitspanne von 2 min wurde die Polyethylenfolie mit UV-Licht bestrahlt. Während der Bestrahlung wurde die Bespülung mit dem genannten Gasgemisch fortgesetzt. Zur Bestrahlung wurde eine Quecksilber-Hochdrucklampe (1000 Watt, ungefiltert) verwendet, wobei der Abstand zwischen dem Quecksilberstrahler und der Oberfläche der Polyethylenfolie ca. 16 cm betrug.

Die Zeitdauer der Bestrahlung betrug 5 min. Nach Beendigung der Bestrahlung wurde die Polyethylenfolie aus dem Reaktor genommen. Zur Extraktion löslicher Produkte wurde die Polyethylenfolie 10 min unter Verwendung eines Ultraschallbades mit einem Gemisch, das 50 Volumsteile Aceton und 50 Volumsteile Wasser enthielt, bei einer Temperatur von 20°C extrahiert. Nach Trocknung im Vakuum (2 h bei 20 mbar und 40°C) wurde die Polyethylenfolie physikalisch-chemischen Untersuchungen unterworfen.

Die Untersuchung der Oberfläche der Polyethylenfolie mittels Infrarotspektroskopie (Verfahren der unterdrückten Totalreflexion) zeigte zusätzliche Infrarotsignale im Bereich um 1038 cm⁻¹ und im Bereich um 1156 cm⁻¹. Diese Infrarotsignale sind den symmetrischen und asymmetrischen Valenzschwingungen von SO₃-Einheiten in Sulfonsäuren zuzuordnen (G. Socrates, Infrared Characteristic Group Frequencies, S. 164 ff., John Wiley & Sons, Chichester 1994). Die Untersuchung der Oberfläche der Polyethylenfolie mittels Röntgen-Photoelektronenspektroskopie ergab ein für Schwefel typisches Signal bei ca. 169,4 eV, was das Vorliegen kovalent gebundener Sulfonsäuregruppen an der Oberfläche bewies. Einen weiteren Beweis für das Vorliegen von schwefelhaltigen Funktionalitäten an der Oberfläche der Polyethylenfolie lieferte auch die energiedispersive Röntgenspektroskopie, die ein für Schwefel typisches Signal bei 2,3 keV anzeigte.

Daraus ergab sich, daß in die oberflächennahen Bereiche der Polyethylenfolie Sulfonsäuregruppen der allgemeinen Struktur R-SO₂-OH eingebaut worden waren.

### Beispiel 2

### Strukturierte Modifizierung der Oberfläche von Low-Density-Polyethylen

Eine Folie aus Low-Density-Polyethylen (Fläche 10 x 10 mm², Schichtdicke 20 µm) wurde 10 min unter Verwendung eines Ultraschallbades mit einem Gemisch, das 50 Volumsteile Aceton und 50 Volumsteile Wasser enthielt, bei einer Temperatur von 20°C gereinigt. Nach Trocknung im Vakuum (2 h bei 20 mbar und 40°C) wurde die Polyethylenfolie in einen Reaktor eingebracht, der eine Bespülung mit einem Gasgemisch und gleichzeitig eine UV-Bestrahlung der Folie durch ein Quarzfenster ermöglichte. Der Abstand der Folienoberfläche zur Innenseite des Quarzfensters wurde auf 2 mm eingestellt. Die Polyethylenfolie wurde im Reaktor mittels einer Thermostatisiervorrichtung auf eine Temperatur zwischen 50°C und 60°C gebracht.

Die Polyethylenfolie wurde dann im Reaktor für eine Zeitspanne von 2 min bei Normaldruck (1 bar) mit einem Gasgemisch bespült, das folgende Zusammensetzung aufwies: 33 Volumsteile Schwefeldioxid (SO₂), 14 Volumsteile Sauerstoff (O₂) und 53 Volumsteile Stickstoff (N₂).

Nach Ablauf der Zeitspanne von 2 min wurde die Polyethylenfolie mit UV-Licht bestrahlt. Zur Bestrahlung wurde eine Quecksilber-Hochdrucklampe (1000 Watt, ungefiltert) verwendet, wobei sich zwischen der Lampe und der zu bestrahlenden Polyethylenfolie eine optische Anordnung befand. Die optische Anordnung bestand aus einer Kondensorlinse (Brennweite f = 200 mm), einer Blende zum Ausblenden von Streulicht sowie einer Projektionslinse (Brennweite f = 50 mm). Mit Hilfe dieser optischen Anordnung wurde dann eine Projektionsmaske, die mit Chrom dargestellte Bildsymbole auf einer Quarzplatte aufwies, so auf die Polyethylenfolie abgebildet, daß sich eine Verkleinerung der Bildsymbole um den Faktor 5 ergab.

Während der Bestrahlung wurde die Bespülung mit dem genannten Gasgemisch fortgesetzt. Die Zeitdauer der Bestrahlung betrug 10 min. Nach Beendigung der Bestrahlung wurde die Polyethylenfolie aus dem Reaktor genommen. Zur Extraktion löslicher Produkte wurde die Polyethylenfolie 10 min unter Verwendung eines Ultraschallbades mit einem Gemisch, das 50 Volumsteile Aceton und 50 Volumsteile Wasser enthielt, bei einer Temperatur von 20°C extrahiert. Anschließend wurde die Polyethylenfolie im Vakuum (20 mbar) für 2 Stunden bei 40°C getrocknet.

Die Polyethylenfolie wurde anschließend einer Färbereaktion mit einem kationischen Farbstoff (Methylenblau) unterworfen. Zu diesem Zweck wurde die Folie in ein Gemisch, das aus 75 Volumsteilen Methanol und 25 Volumsteilen 1,4-Dioxan bestand und das 1 Gewichtsprozent Methylenblau enthielt, eingelegt. Nach 2 Minuten wurde die Polyethylenfolie entnommen, mit Wasser und Aceton gespült und im Vakuum (20 mbar) für 2 Stunden bei 40°C getrocknet.

Die bestrahlten Zonen der Polyethylenfolie waren durch eine Blaufärbung erkennbar. Die nicht belichteten Zonen der Polyethylenfolie wiesen keine bzw. eine wesentlich schwächere Färbung auf.

Daraus ergab sich, daß in die bestrahlten Zonen der Polyethylenoberfläche Sulfonsäuregruppen der allgemeinen Struktur R-SO₂-OH eingebaut worden waren. Die bestrahlten Zonen der Polyethylenoberfläche wurden nach Bindung des kationischen Farbstoffs Methylenblau an die eingeführten Sulfonsäuregruppen durch eine Blaufärbung in Form eines Bildmusters erkennbar.

### Beispiel 3

### Flächige Modifizierung der Oberfläche von Polystyrol

Eine Folie aus Polystyrol (Fläche 10 x 10 mm², Schichtdicke 5 µm, Molmassenmittel M_{w} = 240000 g/mol) wurde in einen Reaktor eingebracht, der eine Bespülung mit einem Gasgemisch und gleichzeitig eine UV-Bestrahlung der Folie durch ein Quarzfenster ermöglichte. Der Abstand der Folienoberfläche zur Innenseite des Quarzfensters wurde auf 2 mm eingestellt. Die Polystyrolfolie wurde im Reaktor mittels einer Thermostatisiervorrichtung auf eine Temperatur zwischen 50°C und 60°C gebracht.

Die Polystyrolfolie wurde dann im Reaktor für eine Zeitspanne von 2 min bei Normaldruck (1 bar) mit einem Gasgemisch bespült, das folgende Zusammensetzung aufwies: 33 Volumsteile Schwefeldioxid (SO₂), 14 Volumsteile Sauerstoff (O₂) und 53 Volumsteile Stickstoff (N₂).

Nach Ablauf der Zeitspanne von 2 min wurde die Polystyrolfolie mit UV-Licht bestrahlt. Während der Bestrahlung wurde die Bespülung mit dem genannten Gasgemisch fortgesetzt. Zur Bestrahlung wurde eine Quecksilber-Hochdrucklampe (1000 Watt, ungefiltert) verwendet, wobei der Abstand zwischen dem Quecksilberstrahler und der Oberfläche der Polystyrolfolie ca. 16 cm betrug.

Die Zeitdauer der Bestrahlung betrug 20 min. Nach Beendigung der Bestrahlung wurde die Polystyrolfolie aus dem Reaktor genommen. Zur Extraktion löslicher Produkte wurde die Polystyrolfolie 10 min unter Verwendung eines Ultraschallbades mit destilliertem Wasser bei einer Temperatur von 20°C extrahiert. Nach Trocknung im Vakuum (2 h bei 20 mbar und 40°C) wurde die Polystyrolfolie physikalisch-chemischen Untersuchungen unterworfen.

Die Untersuchung der Oberfläche der Polystyrolfolie mittels Infrarotspektroskopie (Transmissionsmessung) zeigte zusätzliche Infrarotsignale im Bereich um 1130 cm⁻¹ und im Bereich um 1328 cm⁻¹. Diese Infrarotsignale sind den symmetrischen und asymmetrischen Valenzschwingungen von SO₃-Einheiten in Sulfonsäuren zuzuordnen. Die Analyse der Polystyrolfolienoberfläche mittels energiedispersiver Röntgenspektroskopie ergab ein für Schwefel typisches Signal bei 2,3 keV.

Daraus ergab sich, daß in den bestrahlten Zonen der Polystyroloberfläche Sulfonsäuregruppen der allgemeinen Struktur R-SO₂-OH eingebaut worden waren.

### Beispiel 4

### Flächige Modifizierung der Oberfläche von Polyamid

Eine Folie aus Polyamid-66 (Fläche 10 x 10 mm², Schichtdicke 100 µm) wurde in einen Reaktor eingebracht, der eine Bespülung mit einem Gasgemisch und gleichzeitig eine UV-Bestrahlung der Polyamidfolie durch ein Quarzfenster ermöglichte. Der Abstand der Folienoberfläche zur Innenseite des Quarzfensters wurde auf 2 mm eingestellt. Die Polyamidfolie wurde im Reaktor mittels einer Thermostatisiervorrichtung auf eine Temperatur zwischen 50°C und 60°C gebracht.

Die Polyamidfolie wurde dann im Reaktor für eine Zeitspanne von 15 min bei Normaldruck (1 bar) mit einem Gasgemisch bespült, das folgende Zusammensetzung aufwies: 33 Volumsteile Schwefeldioxid (SO₂), 14 Volumsteile Sauerstoff (O₂) und 53 Volumsteile Stickstoff (N₂).

Nach Ablauf der Zeitspanne von 15 min wurde die Polyamidfolie mit ultraviolettem Licht bestrahlt. Während der Bestrahlung wurde die Bespülung mit dem genannten Gasgemisch fortgesetzt. Zur Bestrahlung wurde eine Quecksilber-Hochdrucklampe (1000 Watt, ungefiltert) verwendet, wobei der Abstand zwischen dem Quecksilberstrahler und der Oberfläche der Polyamidfolie ca. 16 cm betrug.

Die Zeitdauer der Bestrahlung betrug 40 min, wobei nach Ablauf von 20 min die Folie im Reaktor gewendet wurde (beidseitige Bestrahlung). Nach Beendigung der Bestrahlung wurde die Polyamidfolie aus dem Reaktor genommen. Zur Entfernung löslicher Produkte wurde die Polyamidfolie 30 min mit einem Gemisch aus destilliertem Wasser und Aceton (Volumsverhältnis 1 : 1) bei einer Temperatur von 20°C extrahiert. Nach Trocknung im Vakuum (2 h bei 20 mbar und 40°C) wurde die Polyamidfolie physikalisch-chemischen Untersuchungen unterworfen.

Die Untersuchung der Oberfläche der Polyamidfolie mittels Infrarotspektroskopie (Verfahren der unterdrückten Totalreflexion und Transmissionsmessung) zeigte zusätzliche Infrarotsignale im Wellenzahlbereich von 1000 bis 1300 cm⁻¹, wobei insbesondere Signale im Bereich um 1040 cm⁻¹ und 1200 cm⁻¹ zu erkennen waren. Diese Infrarotsignale sind den symmetrischen und asymmetrischen Valenzschwingungen von SO₃-Einheiten in Sulfonsäuren zuzuordnen. Die Analyse der Polyamidfolienoberfläche mittels energiedispersiver Röntgenspektroskopie ergab ein für Schwefel typisches Signal bei 2,3 keV.

Die bestrahlte Polyamidfolie wurde in ein Gemisch, das 50 Gew% destilliertes Wasser, 49 Gew% Aceton sowie 1 Gew% des kationischen Farbstoffs Methylenblau enthielt, eingebracht. Die bestrahlten Bereiche der Polyamidfolie wurden durch eine Blaufärbung erkennbar, wohingegen eine nicht bestrahlte Polyamidfolie keine bzw. nur eine wesentlich schwächere Färbung annahm.

Daraus ergab sich, daß in die bestrahlten Zonen der Polyamidoberfläche Sulfonsäuregruppen der allgemeinen Struktur R-SO₂-OH eingeführt worden waren.

### Beispiel 5

### Flächige Modifizierung der Oberfläche von Polymethylmethacrylat

Eine Platte aus Polymethylmethacrylat (PMMA; Fläche 10 x 10 mm², Schichtdicke 0,5 mm) wurde in einen Reaktor eingebracht, der eine Bespülung mit einem Gasgemisch und gleichzeitig eine UV-Bestrahlung der PMMA-Platte durch ein Quarzfenster ermöglichte. Der Abstand der PMMA-Platte zur Innenseite des Quarzfensters wurde auf 2 mm eingestellt. Die Platte wurde im Reaktor mittels einer Thermostatisiervorrichtung auf eine Temperatur zwischen 50°C und 60°C gebracht.

Die PMMA-Platte wurde dann im Reaktor für eine Zeitspanne von 15 min bei Normaldruck (1 bar) mit einem Gasgemisch bespült, das folgende Zusammensetzung aufwies: 33 Volumsteile Schwefeldioxid (SO₂), 14 Volumsteile Sauerstoff (02) und 53 Volumsteile Stickstoff (N₂).

Nach Ablauf der Zeitspanne von 15 min wurde die PMMA-Platte mit UV-Licht bestrahlt. Während der Bestrahlung wurde die Bespülung mit dem genannten Gasgemisch fortgesetzt. Zur Bestrahlung wurde eine Quecksilber-Hochdrucklampe (1000 Watt, ungefiltert) verwendet, wobei der Abstand zwischen dem Quecksilberstrahler und der Oberfläche der PMMA-Platte ca. 10 cm betrug.

Die Zeitdauer der Bestrahlung betrug 30 min. Nach Beendigung der Bestrahlung wurde die PMMA-Platte aus dem Reaktor genommen. Zur Entfernung löslicher Produkte wurde die PMMA-Platte 10 min mit destilliertem Wasser bei einer Temperatur von 20°C extrahiert. Nach Trocknung im Vakuum (2 h bei 20 mbar und 40°C) wurde die PMMA-Platte physikalisch-chemischen Untersuchungen unterworfen.

Die Untersuchung der Oberfläche der PMMA-Platte mittels Infrarotspektroskopie (Verfahren der unterdrückten Totalreflexion) zeigte zusätzliche Infrarotsignale im Wellenzahlbereich von 1000 bis 1350 cm⁻¹, wobei insbesondere zusätzliche Signale im Bereich um 1040 cm⁻¹ und 1200 cm⁻¹ zu erkennen waren. Diese Infrarotsignale sind den symmetrischen und asymmetrischen Valenzschwingungen von SO₃-Einheiten in Sulfonsäuren zuzuordnen. Die Untersuchung der Oberfläche der PMMA-Platte mittels energiedispersiver Röntgenspektroskopie ergab ein für Schwefel typisches Signal bei 2,3 keV.

Die bestrahlte PMMA-Platte wurde in ein Gemisch, das 70 Gew% destilliertes Wasser, 29 Gew% Aceton sowie 1 Gew% des kationischen Farbstoffs Methylenblau enthielt, eingebracht. Die bestrahlten Bereiche der PMMA-Platte wurden durch eine Blaufärbung erkennbar, wohingegen nicht bestrahltes PMMA keine bzw. nur eine wesentlich schwächere Färbung annahm.

Daraus ergab sich, daß durch die Bestrahlung in die oberflächennahen Bereiche der PMMA-Platte Sulfonsäuregruppen der allgemeinen Struktur R-SO₂-OH eingeführt worden waren.

### Beispiel 6

### Flächige Modifizierung der Oberfläche von Low-Density-Polyethylen mit nachfolgender chemischer Umsetzung der Sulfonsäuregruppen zu Sulfonsäurechlorid-Gruppen.

Eine Folie aus Low-Density-Polyethylen (Fläche 10 x 10 mm², Schichtdicke 20 µm) wurde, wie in Beispiel 1 beschrieben, an der Oberfläche durch Einführung von Sulfonsäuregruppen modifiziert.

Die modifizierte Polyethylenfolie wurde in eine Lösung von 1,5 g Phosphorpentachlorid in 15 g wasserfreiem Dichlormethan eingelegt. Unter Ausschluß von Feuchtigkeit wurde die Reaktionslösung 60 min lang auf ca. 45°C erwärmt. Nach Beendigung der Reaktion wurde die Folie entnommen und mehrmals mit wasserfreiem Dichlormethan gespült, um eventuell vorhandene Reste an nicht umgesetztem Phosphorpentachlorid zu extrahieren. Die Folie wurde anschließend im Vakuum (2 h bei 20 mbar und 20°C) getrocknet.

Das Infrarotspektrum (Verfahren der unterdrückten Totalreflexion), das von der Oberfläche der mit Phosphorpentachlorid behandelten Polyethylenfolie aufgenommen wurde, zeigte signifikante Unterschiede zu dem Infrarotspektrum, das vor der Umsetzung mit Phosphorpentachlorid erhalten wurde. Die für Sulfonsäuren charakteristische Bande bei 1038 cm⁻¹ war im Infrarotspektrum nicht mehr zu erkennen, anstelle dessen waren ein zusätzliches Infrarotsignal bei 1170 cm⁻¹ sowie eine Erhöhung der Bandenintensität bei 1380 cm⁻¹ zu beobachten. Die Signale bei 1170 und 1380 cm⁻¹ sind den symmetrischen und asymmetrischen Valenzschwingungen von SO₂-Einheiten in Sulfochloriden zuzuordnen. Aus den infrarotspektroskopischen Daten ergab sich somit, daß ein größerer Anteil der Sulfonsäuregruppen R-SO₂-OH in Sulfochloridgruppen der Struktur R-SO₂-Cl umgewandelt worden war.

### Beispiel 7

### Flächige Modifizierung der Oberfläche von Low-Density-Polyethylen mit nachfolgender chemischer Umsetzung der Sulfonsäuregruppen zu Sulfonsäureamid-Gruppen

Eine Folie aus Low-Density-Polyethylen (Fläche 10 x 10 mm², Schichtdicke 20 µm) wurde, wie in Beispiel 1 beschrieben, an der Oberfläche durch Einführung von Sulfonsäuregruppen modifiziert. Ein Teil der Sulfonsäuregruppen wurde durch Reaktion mit Phosphorpentachlorid, wie in Beispiel 6 beschrieben, zu Sulfochloridgruppen umgesetzt.

Die derart behandelte Polyethylenfolie wurde in eine Lösung von 0,5 g 4-Aminobenzonitril in 10,0 g wasserfreiem Toluol eingelegt. Die Reaktionslösung wurde für einen Zeitraum von 4 Stunden auf40°C erwärmt. Nach Beendigung der Reaktion wurde die Polyethylenfolie aus der Reaktionslösung genommen, mit reinem wasserfreiem Toluol extrahiert (1 h bei 40°C) und 24 Stunden im Vakuum (20 mbar) bei 40°C getrocknet.

Das Infrarotspektrum (Verfahren der unterdrückten Totalreflexion), das von der Oberfläche der mit Phosphorpentachlorid und anschließend mit 4-Aminobenzonitril behandelten Polyethylenfolie aufgenommen wurde, zeigte signifikante Unterschiede zu den Infrarotspektren, die vor der Umsetzung mit Phosphorpentachlorid bzw. vor der Umsetzung mit 4-Aminobenzonitril erhalten worden waren. Die für Sulfonsäuren charakteristische Bande bei 1038 cm⁻¹ war im Infrarotspektrum nicht mehr zu erkennen. Es wurden zusätzliche Infrarotsignale bei 2228 cm⁻¹ (typisch für die Valenzschwingung der Nitrilgruppe) sowie in den Bereichen um 1610 cm⁻¹ und 840 cm⁻¹ beobachtet. Die Banden um 1610 und 840 cm⁻¹ sind aromatischen Verbindungen zuzuordnen. Aus den infrarotspektroskopischen Daten ergab sich, daß ein größerer Anteil der Sulfonsäuregruppen R-SO₂-OH in Sulfonamidgruppen der Struktur R-SO₂-NH-C₆H₄-CN umgewandelt worden war.

## Patentansprüche

1. Verfahren zur Modifizierung oberflächennaher Bereiche von Polymeren im festen Zustand, **dadurch gekennzeichnet, daß** die oberflächennahen Bereiche des Polymers mit einer gasförmigen, sowohl Schwefeldioxid als auch Sauerstoff enthaltenden Atmosphäre in Kontakt gebracht und gleichzeitig und/oder anschließend einer energiereichen elektromagnetischen Strahlung ausgesetzt werden, wobei Sulfonsäuregruppen in den oberflächennahen Bereichen gebildet werden, und daß vor oder nach der Sulfonierung mittels Vernetzung eine Stabilisierung der oberflächennahen Bereiche oder des gesamten Polymers durchgeführt wird.

2. Verfahren nach Anspruch 1, **dadurch gekennzeichnet, daß** als Polymere natürliche, abgewandelte natürliche oder synthetische Polymere eingesetzt werden.

3. Verfahren nach Anspruch 2, **dadurch gekennzeichnet, daß** als Polymere Polyolefine eingesetzt werden.

4. Verfahren nach Anspruch 3, **dadurch gekennzeichnet, daß** als Polyolefin Polyethylen eingesetzt wird.

5. Verfahren nach Anspruch 3, **dadurch gekennzeichnet, daß** als Polyolefin Polystyrol eingesetzt wird.

6. Verfahren nach Anspruch 3, **dadurch gekennzeichnet, daß** als Polyolefin Polymethylmethacrylat eingesetzt wird.

7. Verfahren nach Anspruch 2, **dadurch gekennzeichnet, daß** als Polymer Polyamid eingesetzt wird.

8. Verfahren nach einem der Ansprüche 1 bis 7, **dadurch gekennzeichnet, daß** die Polymere in Form dünner Filme oder Folien eingesetzt werden.

9. Verfahren nach einem der Ansprüche 1 bis 8, **dadurch gekennzeichnet, daß** als energiereiche Strahlung ultraviolette Strahlung, Röntgen-, Gamma- oder Elektronenstrahlung eingesetzt wird.

10. Verfahren nach Anspruch 9, **dadurch gekennzeichnet, daß** ultraviolette Strahlung in einem Wellenlängenbereich von 190 bis 360 nm eingesetzt wird.

11. Verfahren nach einem der Ansprüche 1 bis 10, **dadurch gekennzeichnet, daß** das Volumsverhältnis von Schwefeldioxid zu Sauerstoff in der gasförmigen Atmosphäre im Bereich von 20:80 bis 97:3, vorzugsweise im Bereich von 60:40 bis 85:15, liegt.

12. Verfahren nach einem der Ansprüche 1 bis 11, **dadurch gekennzeichnet, daß** die gasförmige Atmosphäre inerte Komponenten, vorzugsweise Stickstoff oder Argon, enthält.

13. Verfahren nach Anspruch 12, **dadurch gekennzeichnet, daß** die inerten Komponenten in einer Menge von 1 bis 99 Vol%, vorzugsweise 20 bis 60 Vol%, vorhanden sind.

14. Verfahren nach einem der Ansprüche 1 bis 13, **dadurch gekennzeichnet, daß** die gasförmige Atmosphäre Beschleuniger und/oder Sensibilisatoren, wie Ozon, Schwefeltrioxid, Essigsäureanhydrid, Chloroform und Dichlormethan, enthält.

15. Verfahren nach einem der Ansprüche 1 bis 14, **dadurch gekennzeichnet, daß** die gasförmige Atmosphäre Wasserdampf enthält.

16. Verfahren nach einem der Ansprüche 1 bis 15, **dadurch gekennzeichnet, daß** die Modifizierung bei einem Druck von 0,1 bar bis 10 bar, vorzugsweise bei ungefähr 1 bar, durchgeführt wird.

17. Verfahren nach einem der Ansprüche 1 bis 16, **dadurch gekennzeichnet, daß** das Polymer vor der Bestrahlung 1 Sekunde bis 10 Stunden, vorzugsweise 1 bis 60 Minuten, in der gasförmigen Atmosphäre belassen wird.

18. Verfahren nach einem der Ansprüche 1 bis 17, **dadurch gekennzeichnet, daß** die Bestrahlung des Polymers flächig oder ortsaufgelöst erfolgt.

19. Verfahren nach einem der Ansprüche 1 bis 18, **dadurch gekennzeichnet, daß** die Temperatur des Polymers während der Bestrahlung zwischen -50°C und +250°C, vorzugsweise zwischen +10°C und +70°C, liegt.

20. Verfahren nach einem der Ansprüche 1 bis 19, **dadurch gekennzeichnet, daß** die durch die Strahlung zugeführte Energiedosis im Bereich von 1 mJ/cm² bis 200 J/cm² liegt.

21. Verfahren nach einem der Ansprüche 1 bis 20, **dadurch gekennzeichnet, daß** die Modifizierung kontinuierlich durchgeführt wird.

22. Verfahren nach einem der Ansprüche 1 bis 21, **dadurch gekennzeichnet, daß** das Polymer nach der Modifizierung einem Verfahren zur Entfernung unerwünschter Komponenten oder Reaktionsprodukte unterzogen wird, wie einer Lagerung im Vakuum oder einer Extraktion.

23. Verfahren nach einem der Ansprüche 1 bis 22, **dadurch gekennzeichnet, daß** die in den oberflächennahen Bereichen gebildeten Sulfonsäuregruppen als katalytisch wirksame Gruppen für eine weitere chemische Reaktion oder als Initiatoren für eine Polymerisationsreaktion eingesetzt werden.

24. Verfahren nach einem der Ansprüche 1 bis 22, **dadurch gekennzeichnet, daß** die in den oberflächennahen Bereichen gebildeten Sulfonsäuregruppen zumindest teilweise in Sulfonsäurederivate, wie Sulfonsäurehalogenide, Sulfonsäureamide, Sulfonsäureester, Salze der Sulfonsäuren und Komplexe der Sulfonsäure, umgewandelt werden.

25. Verfahren nach einem der Ansprüche 1 bis 24, **dadurch gekennzeichnet, daß** das in seinen oberflächennahen Bereichen modifizierte Polymer mit Formgebungsverfahren, wir Extrusion, Spritzguß, Tiefziehen und Kalandrieren, weiterverarbeitet wird.

26. Polymere, erhältlich nach einem der Ansprüche 1 bis 25.

27. Verwendung der Polymere nach Anspruch 26 für Zwecke der Medizin, Biochemie und Biologie, für Zwecke der Beschichtung, Verklebung, Kaschierung, Markierung, Färbung und Bildgebung, für Zwecke der Drucktechnik, der lithographischen Technik, der Membrantechnik sowie für chromatographische und sonstige Trennverfahren.

## Claims

1. A process for the modification of near-surface areas of polymers in the solid state, **characterized in that** the near-surface areas of the polymer are contacted with a gaseous atmosphere containing both sulfur dioxide and oxygen and, simultaneously and/or subsequently, are exposed to a high-energy electromagnetic radiation, wherein sulfonic acid groups are formed in the near-surface areas, and that a stabilization of the near-surface areas or of the entire polymer is carried out via cross-linking prior to or after the sulfonation.

2. A process according to claim 1, **characterized in that** natural, modified natural or synthetic polymers are used as polymers.

3. A process according to claim 2, **characterized in that** polyolefins are used as polymers.

4. A process according to claim 3, **characterized in that** polyethylene is used as the polyolefin.

5. A process according to claim 3, **characterized in that** polystyrene is used as the polyolefin.

6. A process according to claim 3, **characterized in that** polymethyl methacrylate is used as the polyolefin.

7. A process according to claim 2, **characterized in that** polyamide is used as the polymer.

8. A process according to any of claims 1 to 7, **characterized in that** the polymers are used in the form of thin films or foils.

9. A process according to any of claims 1 to 8, **characterized in that** ultraviolet radiation, X-ray, gamma or electron radiation is used as the high-energy radiation.

10. A process according to claim 9, **characterized in that** ultraviolet radiation with a wavelength in the range of from 190 to 360 nm is used.

11. A process according to any of claims 1 to 10, **characterized in that** the volume ratio of sulfur dioxide to oxygen in the gaseous atmosphere lies in the range of 20:80 to 97:3, preferably in the range of 60:40 to 85:15.

12. A process according to any of claims 1 to 11, **characterized in that** the gaseous atmosphere contains inert components, preferably nitrogen or argon.

13. A process according to claim 12, **characterized in that** the inert components are present in an amount of 1 to 99% by volume, preferably 20 to 60% by volume.

14. A process according to any of claims 1 to 13, **characterized in that** the gaseous atmosphere contains accelerators and/or sensitizers such as ozone, sulfur trioxide, acetic anhydride, chloroform and dichloromethane.

15. A process according to any of claims 1 to 14, **characterized in that** the gaseous atmosphere contains water vapour.

16. A process according to any of claims 1 to 15, **characterized in that** the modification is carried out at a pressure of 0.1 bar to 10 bar, preferably at approximately 1 bar.

17. A process according to any of claims 1 to 16, **characterized in that**, prior to the radiation, the polymer is left in the gaseous atmosphere for 1 second to 10 hours, preferably for 1 to 60 minutes.

18. A process according to any of claims 1 to 17, **characterized in that** the radiation of the polymer is performed in a planar or locally resolved manner.

19. A process according to any of claims 1 to 18, **characterized in that** the temperature of the polymer lies between -50°C and +250°C, preferably between +10°C and +70°C, during the radiation.

20. A process according to any of claims 1 to 19, **characterized in that** the energy dose supplied by the radiation is in the range of 1 mJ/cm² to 200 J/cm².

21. A process according to any of claims 1 to 20, **characterized in that** the modification is performed continuously.

22. A process according to any of claims 1 to 21, **characterized in that**, after the modification, the polymer is subjected to a process for the removal of undesired components or reaction products, such as to a storage under vacuum or to an extraction.

23. A process according to any of claims 1 to 22, **characterized in that** the sulfonic acid groups formed in the near-surface areas are used as catalytically active groups for a further chemical reaction or as initiators for a polymerization reaction.

24. A process according to any of claims 1 to 22, **characterized in that** the sulfonic acid groups formed in the near-surface areas are converted, at least partially, into sulfonic acid derivatives such as sulfonic acid halides, sulfonamides, sulfonic acid esters, salts of sulfonic acid and complexes of sulfonic acid.

25. A process according to any of claims 1 to 24, **characterized in that** the polymer modified in its near-surface areas is processed further by moulding processes such as extrusion, injection moulding, swaging and calendering.

26. Polymers, obtainable according to any of claims 1 to 25.

27. The use of the polymers according to claim 26 for the purposes of medicine, biochemistry and biology, for the purposes of coating, bonding, lamination, marking, dyeing and imaging, for the purposes of the printing technique, the lithographic technique, the membrane technique as well as for chromatographic and other separation methods.

## Revendications

1. Procédé de modification de surfaces polymères à l'état solide, **caractérisé en ce que** les surfaces polymères sont mises en contact avec une atmosphère contenant du dioxyde de soufre et également de l'oxygène à l'état gazeux, et en même temps et/ou consécutivement, sont soumises à un rayonnement électromagnétique riche en énergie, des groupes d'acide sulfonique étant formés dans les zones proches de la surface, et **caractérisé en ce qu'**une stabilisation des zones proches de la surface ou du polymère total est réalisée avant ou après la sulfonation au moyen d'une réticulation.

2. Procédé selon la revendication 1, **caractérisé en ce que** l'on utilise comme polymères, des polymères naturels, d'origine naturelle ou synthétiques.

3. Procédé selon la revendication 2, **caractérisé en ce que** l'on utilise comme polymères, la polyoléfine.

4. Procédé selon la revendication 3, **caractérisé en ce que** l'on utilise comme polyoléfine, le polyéthylène.

5. Procédé selon la revendication 3, **caractérisé en ce que** l'on utilise comme polyoléfine, le polystyrène.

6. Procédé selon la revendication 3, **caractérisé en ce que** l'on utilise comme polyoléfine, le polyméthylméthacrylate.

7. Procédé selon la revendication 2, **caractérisé en ce que** l'on utilise comme polymères, le polyamide.

8. Procédé selon l'une quelconque des revendications 1 à 7, **caractérisé en ce que** l'on utilise les polymères sous la forme de films fins ou de feuilles.

9. Procédé selon l'une quelconque des revendications 1 à 8, **caractérisé en ce que** l'on utilise comme rayonnement riche en énergie, un rayonnement ultraviolet, un rayonnement à rayons X, un rayonnement gamma ou un rayonnement électronique.

10. Procédé selon la revendication 9, **caractérisée en ce que** le rayonnement ultraviolet est utilisé dans une plage de longueur d'ondes de 190 à 360 nm.

11. Procédé selon l'une quelconque des revendications 1 à 10, **caractérisé en ce que** le rapport volumique du dioxyde de soufre à l'oxygène dans l'atmosphère gazeuse se situe dans une plage de 20:80 à 97:3, de préférence dans une plage de 60:40 à 85:15.

12. Procédé selon l'une quelconque des revendications 1 à 11, **caractérisé en ce que** l'atmosphère gazeuse contient des composants inertes, de préférence de l'azote ou de l'argon.

13. Procédé selon la revendication 12, **caractérisé en ce que** les composants inertes sont présents en une quantité de 1 à 99 % en volume, de préférence de 20 à 60 % en volume.

14. Procédé selon l'une quelconque des revendications 1 à 13, **caractérisé en ce que** l'atmosphère gazeuse contient un accélérateur et/ou des sensibilisateurs tels que l'ozone, le dioxyde de soufre, l'anhydride d'acide acétique, le chloroforme et le dichlorométhane.

15. Procédé selon l'une quelconque des revendications 1 à 14, **caractérisé en ce que** l'atmosphère gazeuse contient de la vapeur d'eau.

16. Procédé selon l'une quelconque des revendications 1 à 15, **caractérisé en ce que** la modification est réalisée à une pression de 0,1 bar à 10 bar, de préférence à environ 1 bar.

17. Procédé selon l'une quelconque des revendications 1 à 16, **caractérisé en ce que** le polymère est laissé 1 seconde à 10 heures, de préférence 1 à 60 minutes dans une atmosphère gazeuse avant d'être soumis au rayonnement.

18. Procédé selon l'une quelconque des revendications 1 à 17, **caractérisé en ce que** l'irradiation du polymère s'effectue de manière superficielle ou ciblée.

19. Procédé selon l'une quelconque des revendications 1 à 18, **caractérisé en ce que** la température du polymère pendant l'irradiation se situe entre -50° C et +250°C, de préférence, entre +10° C et +70° C.

20. Procédé selon l'une quelconque des revendications 1 à 19, **caractérisé en ce que** la dose d'énergie apportée par l'irradiation se situe dans une plage de 1 mJ/cm² à 200 J/cm².

21. Procédé selon l'une quelconque des revendications 1 à 20, **caractérisé en ce que** la modification est réalisée en continu.

22. Procédé selon l'une quelconque des revendications 1 à 21, **caractérisé en ce que** le polymère est soumis après modification, à un procédé d'élimination des composants ou des produits de réaction indésirables, tel qu'un dépôt sous vide ou une extraction.

23. Procédé selon l'une quelconque des revendications 1 à 22, **caractérisé en ce que** l'on utilise des groupes d'acide sulfonique formés dans les zones proches de la surface comme groupes efficaces d'un point de vue catalytique pour une autre réaction chimique ou comme initiateurs pour une réaction de polymérisation.

24. Procédé selon l'une quelconque des revendications 1 à 22, **caractérisé en ce que** les groupes d'acide sulfonique formés dans les zones proches de la surface sont transformés au moins en partie en dérivés d'acide sulfonique tels que des halogénures d'acide sulfonique, des esters d'acide sulfonique, des sels d'acide sulfonique et des complexes d'acide sulfonique.

25. Procédé selon l'une quelconque des revendications 1 à 24, **caractérisé en ce que** le polymère modifié dans ses zones proches de la surface est retransformé avec un procédé de mise en forme tel que l'extrusion, le moulage par injection, l'emboutissage et le calandrage.

26. Polymères obtenus selon l'une quelconque des revendications 1 à 25.

27. Utilisation de polymères selon la revendication 26, dans les domaines de la médecine, la biochimie et la biologie, pour revêtement, collage, stratification, marquage, coloration et mise en forme, à des fins de technique d'impression, de technique de lithogravure, de techniques des membranes ainsi que des procédés chromatographiques et autres procédés de séparation.
